# NEW EUROPEAN PATENT SPECIFICATION

(11) **EP 2 059 546 B2**
(45) Date of publication and mention of the opposition decision: **19.09.2018**
(45) Mention of the grant of the patent: 11.03.2015
(21) Application number: 07837717.3
(22) Date of filing: 05.09.2007
(51) Int. Cl.: C08G 18/80, C08G 18/70, C08G 18/08, C09D 5/04

(54) **SAGGING CONTROL AGENTS**
BIEGUNGSTEUERUNGSMITTEL
AGENTS DE CONTRÔLE DE COULURE

(30) Priority: 05.09.2006 US 842586 P
(43) Date of publication of application: 20.05.2009
(73) Proprietor: Coatings Foreign IP Co. LLC, Wilmington, DE 19801 (US)
(72) Inventor: HUYBRECHTS, Jozef, Theresia, B-2300 Turnhout (BE); FIEBERG, Andreas, 40625 Duesseldorf (DE); GRAWE, Thomas, 51371 Leverkusen (DE); VOGT-BIRNBRICH, Bettina, 42719 Solingen (DE); WISSING, Klaus, 40235 Duesseldorf (DE)
(74) Representative: LKGLOBAL Lorenz & Kopf PartG mbB Patentanwälte
(86) International application number: PCT/US2007/019320
(87) International publication number: WO 2008/030445

(56) References cited:
- WO-A-01/88006
- WO-A-2006/088593
- WO-A1-01/88006
- WO-A1-2005/005558
- WO-A1-2006/088593
- WO-A2-2006/127820
- US-B2- 6 767 958

## Description

### Field of Invention

The invention relates to a process for preparing a sagging control agents for aqueous coating compositions, the sagging control agents having an improved rheological performance.

### Description of Related Art

A fundamental requirement of paints and coatings is that they must flow well, but not run. Good flow requires the viscosity to be kept sufficiently low for long enough time to allow the surface of the coating to form an even smooth surface under the influence of surface tension. When the coating remains "open" in this way, however, dripping may occur on vertical surfaces due to the influence of shear force. To prevent dripping, the viscosity must be as high as possible to stop the thin coating from flowing. This means that the viscosity of the coating must be relatively low during and shortly after application - to ensure good flow - and relatively high thereafter - to prevent dripping. In order to obtain good flow without dripping, rheology additives, e.g., sagging control agents are added to the coating material.

Sagging control agents (SCAs) in coating compositions are well-known. These can be e.g. low-molecular, semi-crystalline, urea based organic compounds, which can also function as antisettling agent, such compounds giving the paint a high viscosity at low shear rate/stress.

These SCAs are particularly known and described in solvent-based high-solids and medium-solids coating compositions.

For example, U.S. 4,311, 622 discloses thixotropic coating compositions prepared from a binder and a SCA, which is the reaction product of a diisocyanate and a monoamine or hydroxy monoamine. The reaction between the diisocyanate and the monoamine is carried out in the presence of an inert organic solvent and preferably in the presence of a binder.

Similarly, EP-A-0 198 519 discloses thixotropic coating compositions comprising a SCA, which is the reaction product of a diisocyanate and a mono- or diamine containing a primary amine group and an ether group. Furthermore, EP 192 304 discloses thixotropic coating compositions comprising a SCA, which is the reaction product of an isocyanurate-trimer from a diisocyanate and an amine with at least one primary amine group. Those SCAs are prepared in presence of organic solvents and in the presence of solvent-based binder formulations. The presence of the binder is needed to be able to get a controlled crystallization process under shear to form an active urea particle network. The SCAs are suitable for use in solvent-based coating compositions having a high-solids content because those are specifically sensitive to sagging.

Against the background of increasingly stringent environmental legislation, water-based paints have become more and more important in recent years in various fields of application, including, vehicle painting. Water-soluble or water-dispersible binders are provided for the production of water-based paints. In addition those water-based paints also require additives, e.g., SCAs, which are specifically adapted to the use in aqueous coating compositions and which do not remarkable increase the content of organic solvents in the aqueous composition when being worked in into the aqueous composition.

There was, therefore, a need for sagging control agents for aqueous coating compositions and thixotropic aqueous coating compositions containing sagging control agents, which, on the one hand, show the desired rheological and optical properties / appearance and, on the other hand, contain only very small amounts of organic co-solvents. The sagging control agents shall be universally applicable in waterborne pigmented top coats and transparent clear coats as well as in waterborne colour- and/or effect-imparting base coats and in primers.

### Summary of the Invention

The present invention relates to a process for preparing a sagging control agent containing at least one urea group,
wherein the sagging control agents are obtained by reacting components comprising A), B) and optionally C) in the presence or absence of a binder in an aqueous phase,
wherein component A is
at least one hydrophilic polyisocyanate, having at least two isocyanate groups, said polyisocyanate is modified with at least one functional group selected from a group consisting of carboxylic acid group, sulfonic acid group, phosphonic acid group, ethylene oxid group and mixtures thereof,
component B) is at least one amino-functional compound selected from a group consisting of an amine with at least one primary amino group and at least one hydroxyl group, having the at least one primary amino group on a primary carbon atom, an amino ether with at least one primary amino group, having the at least one primary amino group on a primary carbon atom and mixtures thereof and
component C) is at least one amino-functional compound other than amino-functional compound B).

### Detailed Description of the Invention

These and other features and advantages of the present invention will be more readily understood, by those of ordinary skill in the art, from a reading of the following detailed description. It is to be appreciated those certain feature of the invention, which are, for clarity, described above and below in the context of separate embodiments, may also be provided in combination in a single embodiment. Conversely, various feature of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard and tetrahydrofurane as the liquid phase.

The short term SCA shall be used here and hereinafter for sagging control agent.

Aqueous coating compositions are coating compositions, wherein water is used as solvent or thinner when preparing and/or applying the coating composition. Usually, aqueous coating compositions contain 20 to 80% by weight of water, based on the total amount of the coating composition and optionally, up to 15% by weight, preferably, below 10% by weight of organic solvents, based on the total amount of the coating composition.

Aqueous phase means water or a mixture of water and at least one organic solvent, whereby the mixture contains maximal 50 % by weight of the organic solvent. Preferably the aqueous phase contains 70 to 100 % by weight of water.

Described herein are SCAs prepared by reacting the at least one hydrophilic polyisocyanate A), the at least one amino-functional compound B) and optionally the at least one amino-functional compound C). The SCAs are prepared in an aqueous phase. The SCAs are prepared in an aqueous phase or directly in an aqueous coating composition. They can be prepared in presence of a binder or in the abcense of any binder.

If the SCAs are prepared in presence of a binder, binder can be a single binder, a combination of binders, a crosslinker, a combination of crosslinkers or a combination of at least one binder and at least one crosslinker.

It was surprising and not obvious, that it was possible to prepare hydrophilically modified rheological active SCAs, which can be used in water-borne coating compositions and provide the water-borne coating compositions with sufficient rheology performance.

It was also surprising, that those SCAs could be prepared directly in an aqueous phase, particularly in water, even in the absence of a binder, and that the SCAs could be prepared directly in an aqueous coating composition. Stable aqueous compositions and stable aqueous coating compositions with sufficient rheology performance have been achieved. SCAs based on compositions disclosed in the prior art, e.g., based on standard SCAs of diisocyanates and benzylamine could not be prepared directly in an aqueous medium, neither in presence of a binder nor in the absence of a binder. Either the aqueous compositions of prior art had no rheological response or compositions full of poorly dispersed urea particles were obtained.

It is an remarkable advantage that the SCAs can be prepared either directly in an aqueous coating composition or separately in an aqueous phase in presence of a binder or in absence of any binder. The latter allows to use the aqueous composition of SCAs as a separate additive, which can be added into quite different aqueous coating compositions, independent on the composition of the coating composition, particularly independent on the binder/crosslinker system of the aqueous coating composition.

If the SCA is prepared in an aqueous phase in presence of a binder it must, however, be ensured that the binder present is compatible with the binder/crosslinker system of the aqueous coating composition.

The term "binder" (the SCA is prepared in presence of) has here the meaning as already defined above.

The aqueous phase the SCA can be prepared in may contain in addition usual coating additives, pigments and/or fillers.

If the preparation of the SCA is carried out in an aqueous phase in presence of a binder, particularly in presence of a water-dilutable binder, the binder is present in amounts of e.g. 10 to 70 % by weight, preferably of 20-60 % by weight based on the total amount of the aqueous phase, including all components present in the aqueous phase.

The SCA is prepared by reacting the at least one hydrophilic polyisocyanate A) having at least two free isocyanate groups with the at least one amino-functional compound B).

Hydrophilic polyisocyanate means any polyisocyanate modified with hydrophilic groups, particularly with chemically incorporated hydrophilic groups, which takes care that the polyisocyanate is water dispersible. Hydrophilic groups to be used to modify the polyisocyanates are carboxyl groups, sulfonic acid groups and/or phosphonic acid or ethylene oxide groups. Mixed modification with anionic and nonionic hydrophilic groups is also possible.

Ionically modified polyisocyanates can be converted into a water-dispersible or water-soluble form by partial or complete neutralization of the ionic groups with neutralization agents.
Anionic groups can be neutralised with bases. Examples of basic neutralising agents are sodium hydroxide, potassium hydroxide, magnesium hydroxide as well as tertiary amines, in particular tertiary amines without any functionality reactive with isocyanate groups, such as trimethylamine, triethylamine, dimethylethylamine, dimethylbutylamine, N-methylmorpholine.

Examples of hydrophilic polyisocyanates to be used in the present invention are described in EP 443 138 (with chemically fixed carboxyl groups), EP 510 438 (with chemically fixed carboxyl groups and a content of ethylene oxide units), EP 548 669 (isocyanatocarboxylic acids containing 0.5 to 500 milliequivalents of carboxyl groups) and EP 1 287 052 (modified polyisocyanates are obtained by reaction of polyisocyanates with 2-(cyclohexylamino)-ethanesulfonic acid and/or 3-(cyclohexylamino)-propanesulfonic acid).

Generally the hydrophilic polyisocyanates or polyisocyanate mixtures to be used in the present invention are characterised by a NCO functionality of at least 2.0, e.g. of 2.0 to 4.0. The hydrophilic polyisocyanates contain a sufficient amount of hydrophilic groups to make them water soluble or dispersible, e.g.1 to 60 weight %, preferably 5 - 40 weight % on polyisocyanate solids of ionic and/or non-ionic hydrophilic groups.

As basis for the hydrophilic polyisocyanates of the present invention any aliphatic, araliphatic, cycloaliphatic or aromatic polyisocyanate with a functionality mentioned above can be used. The polyisocyanates usually contain 3 to 40, preferably 4 to 20 carbon atoms. It is preferred to use a symmetrical aliphatic or cycloaliphatic diisocyanate and/or oligomer of such a diisocyanate, e.g. a trimer of such a symmetrical diisocyanate. As suitable examples of diisocyanates that may be mentioned are the following: tetramethylene-1,4-diisocyanate, hexamethylene-1,6-diisocyanate, dicyclohexyl dimethylmethane-4,4'-diisocyanate, 2,4-toluene diisocyanate, 2,6-toluene diisocyanate, diphenylmethane-4,4'-diisocyanate, cyclohexyl-1,4-diisocyanate, dicyclohexyl methane-4,4'-diisocyanate, 1,5-dimethyl-2,4-di(diisocyanato methyl) benzene, 1,5-dimethyl-2,4-di(diisocyanato ethyl) benzene, 1,3,5-trimethyl-2,4-di(diisocyanato methyl) benzene, 1,3,5-triethyl-2,4-di(diisocyanato methyl) benzene and isophorone diisocyanate. Also oligomers of those diisocyanates, e.g., the dimeric and/or trimeric derivatives of the diisocyanates, such as, the uretdione, isocyanurate and biuret analogues can be used. The polyisocyanates may also contain carbodiimide, allophanate, urethane and urea groups. Preferred are the oligomers of hexamethylene-1,6-diisocyanate, especially preferred are isocyanurate-trimers of hexamethylene-1,6-diisocyanate.

Generally polyisocyanates can be used alone or in combination. The polyisocyanates can be modified before using them in the SCA by reacting them with e.g. OH functional compounds such as OH functional polyester and/or polyurethane precursors using a molar excess of isocyanate groups.

Usually the polyisocyanates are modified with the hydrophilic groups when preparing the polyisocyanates. This can be done e.g. as described in the references mentioned above. Hydrophilic polyisocyanates are also commercially available, e.g. from Bayer under the trade name Bayhydur® 2570 and Desmophene XP 2410 or equivalent products, e.g. from Rhodia.

But in-situ formation of water dispersible groups in the aqueous phase on the polyisocyanates is also possible. The water dispersible groups on the polyisocyanates can be formed in situ e.g. through reaction of at least a part of the isocyanate groups with polyethyleneoxide derivatives having groups reactive with isocyanate groups (e.g. hydroxyl terminated polyalkylene glycol) and/or with hydroxyl, mercapto and/or amino acids.

In situ hydrophilization of conventional hydrophobic polyisocyanates (i.e., not specifically hydrophilized polyisocyanates) with compounds mentioned above , e.g. with carboxylic, sulfonic and/or phosphonic acid groups can be done by adding the functional compounds to the polyisocyanate component A) in the aqueous phase just before reacting the polyisocyanate with the amine compound B). Amino and acid functional compounds which can be used for hydrophilization are amino carboxylic acids, amino sulfonic acids and amino phosphonic acids. Examples of suitable amino monocarboxylic acids are glycine (amino acetic acid), aminopropionic acid, 4-aminobutyric acid, 6-amino caproic acid, 6-benzoyl-amino-2chlorocaproic acid, oxaluric acid, anilido acetic acid, 2-hydroxy-carbazole-carboxylic acid-3, 2-ethylamino-benzoic acid, N-2(2-carboxyphenyl)-aminoacetic acid, N-phenylaminoacetic acid, 3,4-diamino-benzoic acid and 5-(4'aminobenzoyl-amino)-2-aminobenzoic acid, sarcosine, methionine, alpha-alanine, beta-alanine, valine, leucine, isoleucine, phenylalanine, cysteine, histidine, lysine. Examples of suitable amino dicarboxylic acids are 5-aminobenzene-dicarboxylic acid, aspartic acid and glutamic acid.

Examples for suitable amino sulfonic acids are 3-(2-aminoethylamino) propane sulfonic acid, 3-cyclohexylaminopropane-1-sulfonic acid, 2-cyclohexylaminoethane sulfonic acid, 3-amino-1-propan sulfonic acid, taurine, methyltaurine, butyltaurine, 1-hydrazine-disulphonic acid, sulphanilic acid, N-phenyl-aminomethane-sulphonic acid, 4,6-dichloroaniline-sulphonic acid-2, phenylenediamine-1,3-disulphonic acid-4,6, N-acetylnaphthylamine-1-sulphonic acid-3, naphthyl-amine-1-sulphonic acid, naphthylamine-2-sulphonic acid, naphthylamine-disulphonic acid, naphthyl-amine-trisulphonic acid, 4,4'-di-(p-aminobenzoyl-amino)-diphenyl urea-disulphonic acid-3,3', phenyl-hydrazine-disulphonic acid-2,5, 2,3-dimethyl-4-aminoazobenzene-disulphonic acid-4'-5, carbazole-disulphonic acid-2,7, 3-amino-benzoic acid-1-sulphonic acid-5, 3-amino-toluene-N-methane-sulphonic acid, 4,6-diaminobenzene-disulphonic acid-1,3, 2,4-diamino-toluene-sulphonic acid-5, 4,4'-diamino-diphenyl-disulphonic acid-2,2', 2-aminophenol-sulphonic acid -2,2-amino-anisole-N-methanesulphonic acid and 2-amino-diphenylamine-sulphonic acid.

The insitu hydrophilization of conventional hydrophobic polyisocyanates is described in more detail in EP 1704928 and EP 1671990 of the same applicant.

The use of hydrophilic polyisocyanates in preparing the SCAs is essential. When using non-hydrophilic polyisocyanates, i.e. usual conventional polyisocyanates not specifically modified with hydrophilic groups or modified with hydrophilic groups in situ, it is not possible to obtain stable seed free aqueous compositions of SCAs.

The second component to be used in the process for preparing the SCA according to the invention is component B), an amino-functional compound selected from a group consisting of an amine with at least one primary amino group and at least one hydroxyl group, having the at least one primary amino group on a primary carbon atom, an amino ether with at least one primary amino group, having the at least one primary amino group on a primary carbon atom and mixtures thereof. Component B) is essential to provide stable aqueous compositions of SCAs.

For example, all hydroxy-functional aliphatic and/or araliphatic mono- and polyamines fulfilling the structural requirements mentioned above can be used as component B). The mono- and polyamines have for example molecular weights (Mn) of 61 to 5000. Examples of suitable components B) are alkanol amines, alkylalkanol amines und/oder arylalkanol amines with 1 to 18 carbon atoms, preferably, 1 to 8 carbon atoms. Suitable hydroxy-monoamines are monohydroxy-monoamines, such as, 2-aminoethanol, 3-aminopropanol, 1-amino-2-propanol, 5-aminopentanol and polyhydroxy-monoamines, such as tris- hydroxylmethyl amino methane, 2-ethyl-2-amino-1,3-dihydroxypropane. Furthermore, hydroxy-diamines may be used as component B) e.g., N-(2-aminoethyl)ethanol amine, N-(3-aminopropyl) propanol amine.

Also amino ethers having the at least one primary amino group on a primary carbon atom may be used as component B). Suitable amino ethers are (cyclo)alkoxy (cyclo)alkyl mono- and diamines. The ether amines generally contain not more than 55 carbon atoms, preferably 1-24 and more particularly 1-12 carbon atoms Suitable examples of ether amines are alkoxy ethyl amines, alkoxy propylamines, such as 2-methoxyethyl amine, 2-ethoxyethyl amine, 3-methoxy-1-propyl amine, 3-ethoxy-1-propyl amine, 1-methoxymethylpropylamine, 1,1-dimethoxy-2-propylamine, 3-ethoxy-1-propylamine, 3-butoxy-1-propylamine, 3-(2-ethylhexyloxy)-1-propylamine, 3-tridecyloxypropylamine, 3-stearyloxypropylamine, p-methoxybenzylamine, 3,4-dimethoxybenzylamine, p-methoxyphenylethylamine, 3,4-dimethoxyphenyl-ethylamine, 9-phenoxy-4,7-dioxanon-1-amine, 2-methyl-4-methoxyaniline, 2,5-dimethoxy-aniline, furfurylamine, tetrahydrofurfurylamine, 2-(4-morpholinyl)ethylamine, 4-(3-aminopropyl)morpholine, 2,2'-aminoethoxyethanol, 4,7-dioxadecane-1,10-diamine, 4,9-dioxadecane-1,12-diamine, 7-methyl-4,10-dioxatridecane-1,13-diamine, 4,7,10-trioxatridecane-1,13-diamine.
Further suitable examples of ether amines are the higher molecular weight polyether amines known under the trade name Jeffamine® from Huntsman.

Amino-functional compounds B) may be used alone or in combination with each other. They can also be used in combination with at least one additional amino-functional compound C) other than amino-functional compound B), with the proviso that at least one of the isocyanate functional groups of the hydrophilic polyisocyanate A) has been modified with the amine compound B. Those additional amines have for example molecular weights (Mn) of 70 to 5000. Amines C) can be amines having at least one primary and/or secondary amino group. Examples of amine compounds C) are dialkanolamines, such as diethanol amine, diisopropanolamine, 2-amino-1-butanol, imidazole, 4(5)-nitroimidazole, 2- or 4-methylimidazolepiperazine, N-ethylpiperazine, 1-(2-hydroxyethyl)piperazinemorpholine, 2,6-dimethylmorpholine-hexamethyleneimine, piperidinepyrrolidine and N-methylethanolamine,

Reaction products of primary amines and e.g. epoxy derivatives can also be used.

In the reaction between the polyisocyanate A), the amino-functional compound B) and the optional amino-functional compound C) for the preparation of the SCA either the polyisocyanate or the amine compounds may generally be employed in excess relative to the stoichiometric amount. Preferably the molar ratio NCO : NH/ NH₂ is about one, but excess of either NCO or NH/ NH₂ can be used if needed for specific purposes. For example, the molar ratio of amino groups of the amino-functional compounds B) and C) to the isocyanate groups of the polyisocyanate may be in the range of 0.7 to 1.5, which ratio, however, should preferably be 1:1.

Additional amines C) have to be chosen in that the reaction product of components B) and C) with the polyisocyanate A) is pseudoplastic and stable in water. Pseudoplastic means that the high shear viscosity of the reaction product (SCA) at 300 rpm is at least 5 times lower than the viscosity at 3 rpm, each measured at a composition of 3% by weight of the SCA in water.

When using the additional amine C) it must be ensured that at least one NCO group of the hydrophilic polyisocyanate is reacted with amine compound B) and the balance with other amine compounds C) is such, that the ratio of amine compounds B) and other amine compounds C) gives a rheologically active urea reaction product which is stable. The ratio depends on the exact structure of amine compounds B) and other amine compounds C). The use of other amine compounds C) in the composition leads to improved compatibility with the binders in the final paint composition and helps optimizing the desired rheology profile (e.g. thixotropy versus pseudoplasticity).

For simplification the term amino-functional compound B) shall mean hereinafter amino-functional compound B) and optionally at least one additional amino-functional compound C).
The SCA is prepared by reacting components A) (polyisocyanate) and B) (amino-functional compound)

The reaction may be carried out separately in an aqueous phase, preferred in water or may be carried out directly in the aqueous coating composition the SCA shall be used in. The reaction between components A) and B) can be carried out at temperatures in the range of 0-95 °C, preferred in the range of 10-40 °C.

The reaction between components A) and B) may be carried out in detail in that the amino-functional compound B) or the polyisocyanate A) is added to the aqueous phase, or alternatively to the aqueous coating composition and subsequently the other component is added and mixed. Both components can also be mixed and added then as a mixture to the aqueous phase or alternatively to the aqueous coating composition. It has to be ensured that as little as possible reaction of the polyisocyanate with water occurs.

If desired, the addition of the polyisocyanate A) and/or the amine compound B) may be done in one or several steps.

Although in general the reaction of components A) and B) may be combined in any arbitrarily chosen manner, e.g., such as, described above, it is preferred that the polyisocyanate A) should be added to the amino-functional compound B), i.e., the amino-functional compound B) is mixed with the aqueous phase or alternatively is added to the aqueous coating composition first and subsequently the polyisocyanate A) is added respectively. Preferably the polyisocyanate A) is added by fast or controlled addition to the amino-functional compound B containing aqueous phase or alternatively to the amino-functional compound B containing aqueous coating composition, e.g. with stirring.

Even if not preferred the amine compound B) can be added to the polyisocyanate containing aqueous phase or aqueous coating composition. The amine compound B) and polyisocyanate A) can also be added simultaneously to the aqueous phase or to the aqueous coating composition.

The reaction between components A) and B) is directly carried out in an aqueous phase or directly in the aqueous coating composition.

If the SCA is prepared separately in an aqueous phase an intermediate aqueous composition containing the SCA results. That intermediate aqueous composition has for example a viscosity of 100 to 100000 cps, preferably of 500 to 10000 cps. Viscosity as used here is the starting viscosity, i.e. the viscosity of the intermediate aqueous composition prior to the addition of further optional components, such as additives and pigments. The viscosity is measured by Brookfield at 2-20 rpm. The aqueous composition containing the SCA is rheologically active which means that the high shear viscosity is substantially lower than the low shear viscosity. With high shear viscosity is meant the viscosity measures at shear rates above 300 rpm or corresponding shear stresses. By stopping the stress applied on the aqueous composition containing the SCA and switching to a low shear rate (below 1 rpm) or low shear stress,the viscosity builds up either quite insteneously (pseudoplastic behaviour) or slowly (thixotropic behaviour) The choice of the, amine compounds B) and C), the hydrophilic polyisocyanate A) and the optional present binders determine the final rheological profile.

After completion of the bulding reaction of the SCA, preferably in the aqueous phase, it is also possible to add other ingredients of the final aqueous coating composition such as usual coating additives, pigments, fillers and eventually small amounts of organic solvents.

If the reaction of components A) and B) is carried out in the aqueous phase in presence of a binder, preferably a water-dilutable binder, the reaction is carried out in an aqueous dispersion of the water-dilutable binder having a viscosity of > 500 cps, more preferably, of 1000 or more than 1000 cps. The upper limit of viscosity can be, e.g., 30,000 cps. A preferred range for the viscosity of the aqueous dispersion of the water-dilutable binder A) is > 500 to 30,000, a more preferred range is 1000 to 10,000 cps. The viscosity is measured by Brookfield at 2-20 rpm. Viscosity as used here is the starting viscosity of the aqueous dispersion, i.e. the viscosity of the aqueous dispersion of the water-dilutable binder prior to the addition of components A) and/or B). If the SCA is prepared in an aqueous dispersion of the water-dilutable binder having a viscosity below 500 cps, unstable SCA compositions with lumps and seed are result. The desired viscosity of the aqueous dispersion of the water-dilutable binder may result from the aqueous dispersion of the water-dilutable binder itself or may be achieved by adding usual thickeners to the aqueous dispersion of the water-dilutable binder. Usual thickeners are, e.g., alkali swellable thickeners, associative thickeners, silica and bentonite.

The aqueous dispersion of the water-dilutable binder may have a solids content of e.g., 10% to 65% by weight.

Suitable water-dilutable binders may be for example binders which are used in the aqueous coating composition. Those binders are described in more detail below. It must, however, be ensured that the functional groups of the binder do not react with the polyisocyanate A) and the amine compound B) when preparing the SCA in presence of the water-dilutable binder.

The SCAs can also be prepared directly in the aqueous coating composition the SCAs shall be used in. If the reaction of components A) and B) is carried out in the aqueous coating composition, in general the reaction of components A) and B) may be combined in any arbitrarily chosen manner, e.g., such as, described above, it is preferred that the polyisocyanate A) should be added to the amino-functional compound B), i.e., the amino-functional compound B) is first mixed into the aqueous coating composition and the polyisocyanate A) is then added and mixed in.

Described is also an aqueous coating compositions containing the hydrophilic SCAs described above. Aqueous coating compositions containing the SCAs preferably, comprise 0.1 to 30% by weight solids, especially preferred, 0.5 to 20% by weight solids of the SCA , based on the total amount of aqueous coating composition.

The aqueous coating composition preferably comprises:
a) 10-90% by weight solids of the at least one water-dilutable binder,
b) 0-70% by weight solids of the at least one curing agent,
c) 30-60 % by weight of water,
d) 0-70% by weight solids of usual coating additives, pigments, extenders and/or organic solvents and
e) 0.1-30% by weight solids, preferably 0.5 to 20% by weight solids of the at least one SCA desribed above,
wherein the % by weight of components a) to e) add up to 100%.

Component a) of the coating composition described herein comprises water-dilutable binders which may contain functional groups suitable for crosslinking reactions with appropriate crosslinkers.

The water-dilutable binders which can be used are not subject to any particular restrictions. All water-dilutable binders usually used to prepare aqueous coating compositions, e.g., in the field of automotive and industrial coating can be used as binder component a). Those water-dilutable binders as well as preparation methods for the binders are known to the person skilled in the art and are disclosed in detail in various patents and other documents. Examples of water-dilutable binders are polyurethane(urea) resins, polyester resins, (meth)acrylic copolymer resins, epoxy resins, polysiloxane resins, alkyd resins, cellulose esters, melamine resins and any hybrid binders derived therefrom. The hybrid binders comprise combinations of at least two binders, in particular, selected from among polyurethane(urea) resins, polyester resins and (meth)acrylic copolymer resins, wherein the binders, of which there are at least two, are bound together covalently and/or in the form of interpenetrating resin molecules.

The water-dilutable binders a) may comprise non-functional or reactive resins. The binders may be physically drying, self cross-linking or externally cross-linking. Crosslinking may occur for example, by ionic and/or radical polymerisation, polycondensation and/or polyaddition reactions. Chemically cross-linkable binder systems contain cross-linkable functional groups. Suitable functional groups are, for example, hydroxyl groups, blocked hydroxyl groups, blocked isocyanate groups, acetoacetyl groups, unsaturated groups, for example, (meth)acryloyl groups and allyl groups, epoxide groups, carboxyl groups, carbamate amine groups and blocked amine groups.

The water-dilutable binders in case of crosslinkable formulations are oligomeric and/or polymeric compounds and/or compounds with a defined structure with a number average molecular weight Mn of, e.g., 500 to 500,000 g/mole, preferably, of 1100 to 300,000 g/mole. They may also be present at a number average molecular weight Mn greater than 500 000 g/mole or in form of microgels with infinite molecular weight in case of non-crosslinkable formulations, e.g. as polyurethane and/or acrylic microgels, which can be used e.g. in water borne basecoats . In such formulations other binders can be present.

In order to ensure sufficient water dilutability of the binders a), these binders are modified in a suitable manner to render them hydrophilic. The binders a) may be ionically (anionically and/or cationically) and/or non-ionically modified. An anionic and/or non ionic modification is preferred. An anionic modification may be obtained, for example, by incorporating carboxyl groups or sulfonic acid groups which are at least partially neutralized. The anionic groups are neutralised with bases. A non-ionic modification may be obtained, for example, by incorporating polyethylene oxide units. Alternatively, or in addition thereto, it is possible to obtain water-dilutability via external emulsifiers.

The coating composition described herein may optionally comprise at least one cross-linking agent b), which cross-linking agent is capable of entering into a cross-linking reaction with the reactive functional groups of binder component a). The cross-linking agents which can be used are not subject to any particular restrictions. All cross-linking agents usually used to prepare aqueous coating compositions, e.g., in the field of automotive and industrial coating can be used as component b). Those crosslinking-agents as well as preparation methods for the crosslinking-agents are known to the person skilled in the art and are disclosed in detail in various patents and other documents. Depending on the type of reactive functional groups of binder component A) the following cross-linking agents may, for example, be used: polyisocyanates with free isocyanate groups or with at least partially blocked isocyanate groups, polyepoxides, polyacetales, polyanhydrides, polycarboxylic compounds, alkoxy silane compounds, polyamines, carbamate functional resins and amine/formaldehyde condensation resins, for example, melamine resins.

Preferred combinations of binders/crosslinkers are: hydroxy functional binders and polyisocyanates, hydroxy functional binders and blocked polyisocyanates and/or melamin resins.

The binders with hydroxyl groups are, for example, the polyurethanes, (meth)acrylic copolymers, polyesters, polyethers and hybrids therefrom, known from polyurethane chemistry to the skilled person, which are used in the formulation of aqueous coating compositions. They may each be used individually or in combination with one another.

The binder component a) and the crosslinking agent b) are used in such proportion that the equivalent ratio of reactive functional groups of component A) to the corresponding reactive groups of the cross-linking agent B) can be 5:1 to 1:5, for example, preferably, 3:1 to 1:3, and in particular, preferably, 1.5:1 to 1:1.5.

The coating compositions can also contain pigments and/or fillers. All colour and/or special effect-giving pigments of organic or inorganic type used in paints are suitable for pigments. Examples of inorganic or organic colour pigments are titanium dioxide, micronised titanium dioxide, iron oxide pigments, carbon black, azo pigments, phthalocyanine pigments, quinacridone or pyrrolopyrrole pigments. Examples of special effect pigments are metal pigments for example, from aluminum or copper, interference pigments, such as, for example, aluminum coated with titanium dioxide, coated mica, graphite effect pigments. Examples of fillers are silicon dioxide, barium sulphate, talcum, aluminium silicate and magnesium silicate.

The coating compositions can also contain usual additives. These additives are additives usually used in the paint industry. Examples of such additives are light stabilizers, for example, based on benztriazoles and HALS compounds, rheology additives different from the SCAs prepared according to the present invention, thickeners, such as, crosslinked polycarboxylic acid or polyurethanes, anti-foaming agents, wetting agents and catalysts for the crosslinking reaction. The additives are added in the usual amounts familiar to the person skilled in the art.

The coating compositions contain furthermore water, for example, 30-60% by weight, and possibly small amounts of organic solvents, e.g., up to 15% by weight, preferably, below 10% by weight based on the entire coating composition. The organic solvents are solvents conventionally used in coating techniques. These may originate from the preparation of the binders or are added separately. Examples of suitable solvents are monohydric or polyhydric alcohols, e.g., propanol, butanol, hexanol; glycol ethers or esters, for example, diethylene glycol dialkyl ether, dipropylene glycol dialkyl ether, each with C1- to C6-alkyl, ethoxypropanol, butyl glycol; glycols, for example, ethylene glycol, propylene glycol, N-methyl pyrrolidone and ketones, e.g., methyl ethyl ketone, acetone, cyclohexanone; aromatic or aliphatic hydrocarbons, for example, toluene, xylene, or straight-chain or branched aliphatic C6-C12-hydrocarbons. If organic solvents are present, water-miscible organic solvents are preferred.

The aqueous coating composition described herein can be produced in that a conventional aqueous coating composition, e.g., an aqueous base coat or aqueous clear coat, is produced in a known manner and the SCA, e.g. in form of an aqueous composition is added as an additive during production of the coating composition or after production of the coating composition. Generally, the SCA in form of an aqueous composition can be mixed with the other ingredients of the aqueous coating composition, e.g., with the aqueous binders, usual coating additives, e.g., thickeners, pigments, fillers and/or even, if not preferred, with organic solvents.

When the SCA , e.g. in form of an aqueous composition is added after production of the coating composition, it may be added as a separate modular component, e.g. as a component of a modular mixing system, e.g., a mixing system for formulating coating compositions of a large number of different colours, comprising several mixing paints. It proves to be advantageous here that such a SCA containing aqueous composition is long-term stable and very compatible with a number of corresponding paint systems. It may also be easily incorporated into aqueous coating compositions and give the coating composition the desired rheological properties. In addition the SCA containing aqueous composition improve settling resistance of pigments, e.g. of aluminium flakes and other pigments and of fillers, e.g. in pigmented base coats and primers.

A further embodiment and a further advantage of the present invention is, that the SCA can be prepared by reacting components A), B) and optionally C) directly in a pre-prepared aqueous coating composition. This can be done in a way as described above for the preparation of the SCA in the aqueous phase.

Either transparent or pigmented coating compositions can be produced. Therefore, the coating compositions described herein are suited for use as clear coats but can be pigmented with conventional pigments and used as solid-color or effect topcoats, color- and/or special effect-imparting basecoats or undercoats such as sealer, primer or primer surfacer. They can be used to coat a substrate with a single coat or within a multilayer coating of substrates. The aqueous coating compositions may comprise single-component aqueous coating compositions or aqueous coating compositions producible by mixing two or more separately stored components.

The coating compositions described herein, can be applied using known methods, in particular, by spray application. The coating compositions obtained can be cured at room temperature or forced at higher temperatures, for example, up to 80°C, preferably at 20 to 60°C. They can, however, even be cured at higher temperatures of, for example, 80 to 160°C. Curing temperatures are depending on the curing chemistry as well as the field of use of the aqueous coating compositions

The coating compositions described herein, are suitable for automotive and industrial coatings. In the automotive coatings sector, the coatings can be used for both vehicle production line painting and vehicle and vehicle part refinishing as well as for coating large vehicles and transportation vehicles, such as, trucks, busses and railroad cars. For vehicle production line painting, stoving (baking) temperatures of 80 to 140°C, for example, are used, preferably 110 to 130°C. For refinishing curing temperatures of for example, 20°C to 80°C, in particular, 20 to 60°C are used.

The SCAs described herein have excellent rheological activity, can be easily incorporated into aqueous coating compositions or can easily prepared directly in aqueous coating compositions. The SCAs based on hydrophilic polyisocyanates A) and amino-functional compounds B) can be incorporated into aqueous coating compositions without the requirement of using large amounts of organic solvents to ensure, e.g., appropriate application viscosity and a good appearance of the resultant coatings. The SCAs and consequently the aqueous compositions of SCAs prepared according to the present invention show excellent compatibility with the constituents of the final aqueous coating composition. The so prepared coating compositions are stable compositions which show improved rheology performance, i.e., improved sagging of the applied composition. The resultant coatings show a good flow and low tendency to run. They are free of surface defects, such as, pinholes, sags and craters. Furthermore, color-less transparent clear coats can be prepared using the SCAs described herein.

The invention will be further described by reference to the following Examples. All parts and percentages are on a weight basis unless otherwise indicated.

### Examples

### Preparation of SCAs according to the process of the invention

### Example 1

In a reactor equipped with a high speed stirrer (Cowless disk),897.5 parts of water were mixed with 22.9 parts of ethanol amine at room temperature. Under high shear,77.1 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes.

A very viscous,thixotropic dispersion was obtained which was essentially free from seed.

### Example 2

In a reactor equipped with a high speed stirrer (Cowless disk),897.5 parts of water were mixed with 20 parts of ethanol amine at room temperature. Under high shear,80 parts of Bayhydur 3100 (100% solids triisocyanurate from 1,6-hexamethylene diisocyanate modified with methoxy polyethylene oxide from Bayer) were added as fast as possible followed by a rincing step with 2.5 parts of ethoxypropanol. The mixture was hold for 15 minutes.

A very viscous,thixotropic dispersion was obtained which was essentially free from seed.

### Example 3

In a reactor equipped with a high speed stirrer (Cowless disk),897.5 parts of water were mixed with 30.3 parts of 3 - Methoxy propyl amine at room temperature. Under high shear,69.7 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes.

A very viscous,thixotropic dispersion was obtained which was essentially free from seed.

### Preparation of comparative SCAs

### Comparative Example 1

In a reactor equipped with a high speed stirrer (Cowless disk),897.5 parts of water were mixed with 37.1 parts of tris hydroxymethyl amino methane (Dow-Angus) at room temperature. Under high shear,62.9 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes

A liquid like dispersion was obtained which was not stable against settling.

The SCA reaction product settled out as lumps/big crystals.

### Comparative Example 2

In a reactor equipped with a high speed stirrer (Cowless disk),897.5 parts of water were mixed with 36.7 parts of 2-Amino-2-ethyl-1,3-propanediol (Dow-Angus) at room temperature. Under high shear,63.3 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes

A liquid like dispersion was obtained which was not stable against settling.

### Comparative Example 3

In a reactor equipped with a high speed stirrer (Cowless disk),897.5 parts of water were mixed with 34.3 parts benzyl amine at room temperature. Under high shear,65.7 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes

A liquid like dispersion was obtained which was not stable against settling.

### Comparative Example 4

In a reactor equipped with a high speed stirrer (Cowless disk),897.5 parts of water were mixed with 33.9 parts of Diethanol amine at room temperature. Under high shear,66.1 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes

A liquid like dispersion was obtained which was not stable against settling.

### Comparative Example 5

In a reactor equipped with a high speed stirrer (Cowless disk),897.5 parts of water were mixed with 30.3 parts of 2-Amino-1-butanol (Dow-Angus) at room temperature. Under high shear,69.7 parts of Bayhydur XP 2570 (100% solids triisocyanurate from 1,6-hexamethylene diisocyanate modified with sulfonic acid groups from Bayer) were added as fast as possible followed by a rincing step with 2.5 parts of ethoxypropanol. The mixture was hold for 15 minutes

A liquid like dispersion was obtained which was not stable against settling.

### Preparation of Clear Coats

The aqueous compositions of SCAs of examples 1 to 3 were each incorporated into commercially available aqueous two-component clear coats (containing hydroxyl-functional (meth)acrylic copolymer and polyisocyanate hardener) after mixing the hydroxyl and the isocyanate component. The clear coats were applied to metal sheets precoated with conventional primer surfacer and waterborne pigmented base coats and cured 30 minutes at 60°C.

The so obtained color-less transparent clear coats showed improved rheological properties. The applied coatings showed a good flow and low tendency to run. The resultant coatings also showed excellent appearance, i.e. they were free of surface defects, such as, pinholes, sags and craters.

## Claims

1. Process for preparing a sagging control agent containing at least one urea group, wherein the sagging control agent is obtained by reacting components A), B) and optionally C) in presence of a binder in an aqueous phase, wherein component A) is at least one hydrophilic polyisocyanate, having at least two isocyanate groups, said polyisocyanate is modified with at least one functional group selected from a group consisting of carboxylic acid group, sulfonic acid group, phosphonic acid group, ethylene oxid group and mixtures thereof, component B) is at least one amino-functional compound selected from a group consisting of an amine with at least one primary amino group and at least one hydroxyl group, having the at least one primary amino group on a primary carbon atom, an amino ether with at least one primary amino group, having the at least one primary amino group on a primary carbon atom and mixtures thereof and compound C) is at least one amino-functional compound other than amino-functional compound B).

2. Process for preparing a sagging control agent containing at least one urea group, wherein the sagging control agent is obtained by reacting components A), B) and optionally C) in absence of a binder in an aqueous phase, wherein component A) is at least one hydrophilic polyisocyanate, having at least two isocyanate groups, said polyisocyanate is modified with at least one functional group selected from a group consisting of carboxylic acid group, sulfonic acid group, phosphonic acid group, ethylene oxid group and mixtures thereof, component B) is at least one amino-functional compound selected from a group consisting of an amine with at least one primary amino group and at least one hydroxyl group, having the at least one primary amino group on a primary carbon atom, an amino ether with at least one primary amino group, having the at least one primary amino group on a primary carbon atom and mixtures thereof and compound C) is at least one amino-functional compound other than amino-functional compound B).

3. The process according to claim 1 or 2, wherein component A) is a symmetrical diisocyanate and/or oligomer of such a symmetrical diisocyanate.

4. Process of any one of claims 1 to 3, wherein the sagging control agent is obtained by reacting components A), B) and optionally C) in an aqueous coating composition.

## Patentansprüche

1. Verfahren zu Herstellung eines Ablaufreguliermittels, das mindestens eine Harnstoffgruppe enthält, wobei das Ablaufreguliermittel durch Umsetzen von Komponenten A), B) und wahlweise C) in Gegenwart eines Bindemittels in einer wässrigen Phase erhalten wird, wobei Komponente A) zumindest ein hydrophiles Polyisocyanat ist, das zumindest zwei Isocyanatgruppen aufweist, wobei das Polyisocyanat mit zumindest einer funktionellen Gruppe modifiziert ist, ausgewählt aus einer Gruppe, bestehend aus Carbonsäuregruppe, Sulfonsäuregruppe, Phosphonsäuregruppe, Ethylenoxidgruppe und Mischungen davon, Komponente B) zumindest eine aminofunktionelle Verbindung ist, ausgewählt aus einer Gruppe, bestehend aus einem Amin mit zumindest einer primären Aminogruppe und zumindest einer Hydroxylgruppe, wobei das Amin die zumindest eine primäre Aminogruppe an einem primären Kohlenstoffatom aufweist, einem Aminoether mit zumindest einer primären Aminogruppe, wobei der Aminoether die zumindest eine primäre Aminogruppe an einem primären Kohlenstoffatom aufweist, und Mischungen davon und Komponente C) zumindest eine aminofunktionelle Verbindung ist, die verschieden von der aminofunktionellen Verbindung B) ist.

2. Verfahren zu Herstellung eines Ablaufreguliermittels, das mindestens eine Harnstoffgruppe enthält, wobei das Ablaufreguliermittel durch Umsetzen von Komponenten A), B) und wahlweise C) in Abwesenheit eines Bindemittels in einer wässrigen Phase erhalten wird, wobei Komponente A) zumindest ein hydrophiles Polyisocyanat ist, das zumindest zwei Isocyanatgruppen aufweist, wobei das Polyisocyanat mit zumindest einer funktionellen Gruppe modifiziert ist, ausgewählt aus einer Gruppe, bestehend aus Carbonsäuregruppe, Sulfonsäuregruppe, Phosphonsäuregruppe, Ethylenoxidgruppe und Mischungen davon, Komponente B) zumindest eine aminofunktionelle Verbindung ist, ausgewählt aus einer Gruppe, bestehend aus einem Amin mit zumindest einer primären Aminogruppe und zumindest einer Hydroxylgruppe, wobei das Amin die zumindest eine primäre Aminogruppe an einem primären Kohlenstoffatom aufweist, einem Aminoether mit zumindest einer primären Aminogruppe, wobei der Aminoether die zumindest eine primäre Aminogruppe an einem primären Kohlenstoffatom aufweist, und Mischungen davon und Komponente C) zumindest eine aminofunktionelle Verbindung ist, die verschieden von der aminofunktionellen Verbindung B) ist.

3. Verfahren nach Anspruch 1 oder 2, wobei Komponente A) eine symmetrisches Diisocyanat und/oder Oligomer eines solchen symmetrischen Diisocyanats ist.

4. Verfahren nach einem beliebigen der Ansprüche 1 bis 3, wobei das Ablaufreguliermittel durch Umsetzen von Komponenten A), B) und wahlweise C) in einer wässrigen Beschichtungszusammensetzung erhalten wird.

## Revendications

1. Processus permettant de préparer un agent de contrôle de coulure contenant au moins un groupe urée, dans lequel l'agent de contrôle de coulure est obtenu par la mise en réaction des composants A), B) et éventuellement C) en présence d'un liant dans une phase aqueuse, dans lequel le composant A) est au moins un polyisocyanate hydrophile, possédant au moins deux groupes isocyanate, ledit polyisocyanate est modifié avec au moins un groupe fonctionnel choisi parmi un groupe constitué d'un groupe acide carboxylique, d'un groupe acide sulfonique, d'un groupe acide phosphonique, d'un groupe oxyde d'éthylène et de mélanges de ceux-ci, le composant B) est au moins un composé à fonction amine choisi parmi un ensemble constitué d'une amine avec au moins un groupe amine primaire et au moins un groupe hydroxyle, possédant l'au moins un groupe amine primaire sur un atome de carbone primaire, un éther aminé avec au moins un groupe amine primaire, possédant l'au moins un groupe amine primaire sur un atome de carbone primaire et des mélanges de ceux-ci et le composé C) est au moins un composé à amine fonctionnelle autre que le composé B) à amine fonctionnelle.

2. Processus permettant de préparer un agent de contrôle de coulure contenant au moins un groupe urée, dans lequel l'agent de contrôle de coulure est obtenu par la mise en réaction des composants A), B) et éventuellement C) en absence d'un liant dans une phase aqueuse, dans lequel le composant A) est au moins un polyisocyanate hydrophile, possédant au moins deux groupes isocyanate, ledit polyisocyanate est modifié avec au moins un groupe fonctionnel choisi parmi un groupe constitué d'un groupe acide carboxylique, d'un groupe acide sulfonique, d'un groupe acide phosphonique, d'un groupe oxyde d'éthylène et de mélanges de ceux-ci, le composant B) est au moins un composé à fonction amine choisi parmi un ensemble constitué d'une amine avec au moins un groupe amine primaire et au moins un groupe hydroxyle, possédant l'au moins un groupe amine primaire sur un atome de carbone primaire, un éther aminé avec au moins un groupe amine primaire, possédant l'au moins un groupe amine primaire sur un atome de carbone primaire et des mélanges de ceux-ci et le composé C) est au moins un composé à amine fonctionnelle autre que le composé B) à amine fonctionnelle.

3. Processus selon la revendication 1 ou la revendication 2, dans lequel le composant A) est un diisocyanate symétrique et/ou un oligomère d'un tel diisocyanate symétrique.

4. Processus selon l'une quelconque des revendications 1 à 3, dans lequel l'agent de contrôle de coulure est obtenu par la mise en réaction des composants A), B) et éventuellement C) dans une composition de revêtement aqueuse.
